# FASCICULE DE BREVET EUROPEEN

(11) **EP 0 995 647 B1**
(45) Date de publication et mention de la délivrance du brevet: **11.02.2004**
(21) Numéro de dépôt: 99810925.0
(22) Date de dépôt: 12.10.1999
(51) Int. Cl.: B60R 22/19

(54) **Dispositif pour ceinture de sécurité de véhicules**
Vorrichtung für einen Fahrzeugsicherheitsgurt
Device for a vehicle safety belt

(30) Priorité: 21.10.1998 CH 211798
(43) Date de publication de la demande: 26.04.2000
(73) Titulaire: Rossé, René, 2900 Porrentruy (CH)
(72) Inventeur: Rossé, René, 2900 Porrentruy (CH)

(56) Documents cités:
- DE-U- 9 110 642
- FR-A- 2 630 065
- FR-A- 2 646 640
- GB-A- 2 055 945

## Description

L'invention a pour objet un dispositif pour ceintures de sécurité de véhicules, notamment pour les ceintures autorétractables.

On sait que certaines personnes ont de la peine à supporter la pression que la ceinture de sécurité exerce sur leur corps. En effet, cette pression peut créer une gêne et devenir fatigante à la longue, ce qui pousse les utilisateurs à ne pas porter la ceinture. Un des buts de la présente invention est de fournir un dispositif permettant de supprimer ce désagrément des ceintures de sécurité.

Ce problème a déjà fait l'objet de plusieurs inventions brevetées, parmi les plus simples on citera la pincette divulguée dans le document DE 3437424, on trouvera aussi un exposé critique de plusieurs solutions dans le document EP 427 657. Ce dernier document expose une solution intéressante, car elle ne présente pas les défauts de la plupart des solutions antérieures. En effet, le système proposé ne présente pas le défaut d'obliger l'utilisateur à se retourner pour faire une opération qui peut être difficile à exécuter pour des personnes âgées. Malheureusement le système proposé est compliqué, il comporte relativement beaucoup de pièces, il sera donc cher et, de plus, il peut facilement se détériorer, notamment les cliquets peuvent se coincer et ne pas fonctionner.

Le document DE 9110642 U décrit un dispositif pour ceintures de sécurité de véhicules, selon le préambule de la revendication 1.

L'invention a pour but de présenter un dispositif simple, de fonctionnement automatique et de fabrication facile donc bon marché, ne présentant pas les défauts des dispositifs connus. Ces buts sont atteints avec le dispositif pour ceintures de sécurité de véhicules défini à la revendication 1.

L'invention sera mieux comprise et ses caractéristiques et ses avantages apparaîtront plus clairement à la lecture de la description de formes d'exécution données à titre d'exemple en regard des dessins sur lesquels :
La figure 1 représente une vue en perspective d'une forme d'exécution,
La figure 2 représente une vue en perspective d'une autre forme d'exécution.

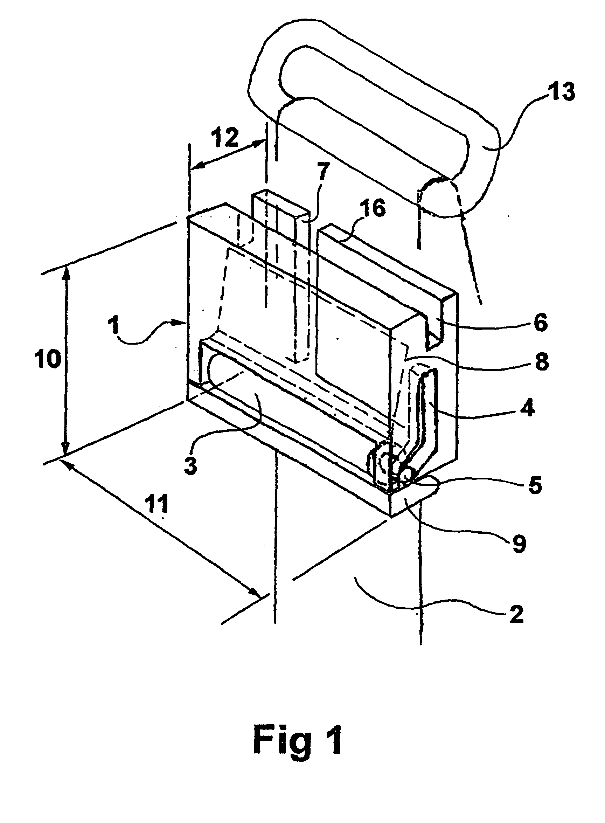

Telle que représentée à la figure 1, la forme d'exécution du dispositif selon l'invention comporte un boîtier 1. Ce boîtier 1 sera maintenu proche de l'anneau 13 de passage de la ceinture 2 par des moyens connus de l'homme du métier et non représentés par exemple, un fil ou une protubérance venue de moulage avec le boîtier, que l'on attachera à l'anneau 13.

Le boîtier 1 est de forme parallélépipédique ayant une longueur 10, une largeur 11 et une épaisseur 12. Dans le boîtier 1 est disposé un cylindre 3, dont l'axe est parallèle à la largeur 11 du boîtier 1. Le cylindre 3 comporte à ses deux extrémités des parties 5 ayant un diamètre inférieur à la partie centrale dudit cylindre. Les parties 5 du cylindre 3 sont placées dans des rainures 4 prévues dans les parois latérales du boîtier 1. Dans la forme d'exécution représentée le logement du cylindre 3 comporte à une extrémité un élargissement de manière à ce que le cylindre soit bien éloigné de la ceinture 2 et les rainures 4 présentent un angle.

Comme on le voit le logement présente une plus grande dimension dans la zone inférieure sur le dessin, cette dimension est plus grande que le diamètre du cylindre 3, et une dimension plus petite dans la zone supérieure sur le dessin. Les deux zones du logement étant reliées par un plan incliné 8. La rainure 4 étant dans sa partie supérieur parallèle à la longueur 10 du boîtier le cylindre viendra se coincer lorsqu'il se déplacera de bas en haut.

Le boîtier 1 pourra être réalisé en matière plastique par moulage. La partie 9 sera fixée après que le cylindre a été introduit dans son logement. Le boîtier 1 comporte encore une encoche 6 permettant un meilleur coulissement de la ceinture 2. Dans cette forme d'exécution le corps 1 présente une fente 7 dans la paroi 16 arrière du boîtier permettant l'introduction de la ceinture 2 dans le boîtier.

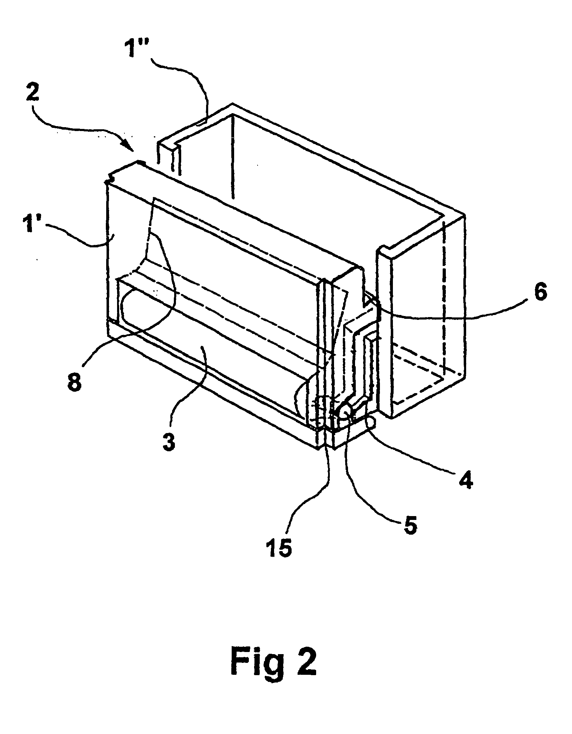

La figure 2 représente une autre forme d'exécution légèrement différente de celle représentée à la figure 1. Afin de mieux faire ressortir les similitudes les mêmes signes de référence ont été utilisés pour désigner les mêmes parties.

Comme on le voit sur la figure le boîtier est constitué de deux parties 1' et 1". La partie 1' se présentant sous la forme d'un bloc comportant une creusure constituant le logement du cylindre 3 et deux rainures 15 sur ses arêtes verticales, et la partie 1" se présentant sous la forme d'un prisme ouvert de section en U dont les extrémités des branches présentent des retournements vers l'intérieur du U. Les parties 1' et 1" sont constituées de manière à pouvoir être emboîtées l'une dans l'autre. La partie 1" est disposée autour de la ceinture, puis la partie 1' est glissée dans la partie 1". Les deux parties sont maintenues ensemble par tout moyen à la portée de l'homme du métier, comme par exemple un encliquetage, de la colle, des chevilles ou des vis.

Le dispositif fonctionne de la manière suivante. L'utilisateur s'assoit et croche sa ceinture normalement, puis soulève le boîtier de manière à l'amener à l'horizontal pour que le cylindre roule vers la zone de petites dimensions et bloque la ceinture dans cette position, légèrement détendue. Pour retirer la ceinture il suffit de la décrocher et d'appliquer une traction pour que le cylindre retombe dans la zone de plus grandes dimensions en libérant la ceinture qui sera retirée par l'enrouleur.

## Revendications

1. Dispositif pour ceintures de sécurité de véhicules, comportant un boîtier (1) parallélépipédique rectangle ayant une épaisseur (12), une longueur (10) et une largeur (11), qui est sensiblement plus grande que la largeur de la ceinture (2), cette dernière étant destinée à passer à travers ledit boîtier (1) dans le sens de sa longueur (10), étant disposé dans un espace à l'intérieur du boîtier (1) un cylindre (3) d'axe parallèle à la largeur (11) du boîtier (1) et libre de se déplacer dans le sens de la longueur (10) dudit boîtier (1) de manière à ce que quand le cylindre (3) se trouve dans une première zone de l'espace la ceinture puisse coulisser librement à travers le boîtier (1) et quand le cylindre (3) se trouve dans une deuxième zone le cylindre (3) puisse bloquer la ceinture en la serrant entre lui-même et une paroi du boîtier (1), le cylindre (3) comportant à ses deux extrémités des parties (5) de diamètre inférieur à son diamètre central, lesdites parties (5) se déplaçant dans des rainures (4) prévues dans les parois latérales dudit boîtier (1), **caractérisé en ce que** à une de ses extrémités l'espace dans lequel le cylindre (3) est disposé a une dimension plus grande que le diamètre du cylindre (3), correspondant à la première zone, et à l'autre extrémité une dimension plus petite que ledit diamètre, correspondant à la deuxième zone, les deux zones sont reliées par un plan incliné (8) étant formé par ladite paroi, et les rainures (4) sont dans une partie supérieure parallèles à la longueur (10) du boîtier (1).

2. Dispositif selon la revendication 1, **caractérisé en ce que** le cylindre est en métal.

3. Dispositif selon l'une des revendications 1 et 2, **caractérisé en ce que** le boîtier (1) comporte une fente (7) dans sa paroi arrière (16) du boîtier s'étendant sur toute sa longueur (10) de manière à pouvoir y introduire la ceinture (2).

4. Dispositif selon l'une des revendications 1 et 2, **caractérisé en ce que** le boîtier est constitué de deux parties (1', 1") de manière à pouvoir enserrer la ceinture entre les deux parties avant leur assemblage.

5. Dispositif selon l'une des revendications précédentes, **caractérisé en ce que** le boîtier est en matière plastique moulé.

## Patentansprüche

1. Vorrichtung für Sicherheitsgurte in Fahrzeugen, die ein quaderförmiges Gehäuse (1) mit einer Dicke (12), einer Länge (10) sowie einer Breite (11) umfasst, die etwas grösser ist als die Breite des Sicherheitsgurtes (2), welcher dazu bestimmt ist, in Längsrichtung durch das Gehäuse (1) zu verlaufen, wobei in einem Aufnahmeraum im Inneren des Gehäuses (1) ein Zylinder (3) mit Achsausrichtung parallel zur Breite (11) des Gehäuses (1) angeordnet und in Längsrichtung des Gehäuses frei verlagerbar ist, sodass dann, wenn der Zylinder (3) sich in einem ersten Bereich des Aufnahmeraumes befindet, der Sicherheitsgurt (2) sich geführt frei durch das Gehäuse (1) bewegen kann, und dann, wenn der Zylinder (3) sich in einem zweiten Bereich befindet, der Zylinder (3) den Sicherheitsgurt (2) blockieren kann, indem er ihn zwischen sich und einer Wandung (16) des Gehäuses (1) festklemmt, wobei der Zylinder (3) an seinen beiden Enden Bereiche (5) hat, deren Durchmesser kleiner ist als sein mittiger Durchmesser, und die Bereiche (5) sich in Schlitzen (4) bewegen, die in den seitlichen Wandungen des Gehäuses (1) vorgesehen sind, **dadurch gekennzeichnet, dass** der Aufnahmeraum für den Zylinder (3) an seinem einen Ende eine grössere Abmessung hat als der Durchmesser des Zylinders (3), was dem ersten Bereich entspricht, und am anderen Ende eine Abmessung kleiner als dieser Durchmesser, was dem zweiten Bereich entspricht, wobei die beiden Bereiche durch eine geneigte Ebene (8) verbunden sind, die durch die Wandung (16) gebildet ist, und die Schlitze (4) in einem oberen Bereich parallel zur Länge (10) des Gehäuses (1) verlaufen.

2. Vorrichtung nach Anspruch 1, **dadurch gekennzeichnet, dass** der Zylinder (3) aus Metall besteht.

3. Vorrichtung nach einem der Ansprüche 1 und 2, **dadurch gekennzeichnet, dass** das Gehäuse (1) einen Schlitz (7) in seiner hinteren Wandung (16) umfasst, der sich über deren gesamte Länge (10) erstreckt, sodass der Sicherheitsgurt (2) hier eingeführt werden kann.

4. Vorrichtung nach einem der Ansprüche 1 und 2, **dadurch gekennzeichnet, dass** das Gehäuse (1) aus zwei Teilen (1', 1") so aufgebaut ist, dass der Sicherheitsgurt (2) vor deren Zusammensetzen zwischen den beiden Teilen (1', 1") eingefügt werden kann.

5. Vorrichtung nach einem der vorangehenden Ansprüche, **dadurch gekennzeichnet, dass** das Gehäuse (1) aus geformtem Kunststoff besteht.

## Claims

1) Device for seat belts in vehicles, comprising a case (1) in the form of a rectangular parallelepiped with a thickness (12), a length (10), and a width (11) that is distinctly larger than the width of the belt (2), the latter being intended to pass through said case (1) in the direction of its length,
a cylinder (3) being disposed ***in a receptacle*** in the interior of the case (1) with its axis parallel to the width (11) of the case (1), and free to shift in the length's direction of said case (1), so that the belt (2) can slide freely through the case (1) if the cylinder (3) is in a first zone of the receptacle, and the cylinder (3) in a second zone can stop the belt (2) by squeezing it between the cylinder itself and a wall of the case (1), the cylinder (3) comprising, at its two ends, parts (5) with a diameter smaller than its central diameter, these parts (5) shifting in grooves (4) in the lateral walls of said case (1), **characterized in that** the receptacle for the cylinder (3) having, at its one end corresponding to the first zone, a dimension greater than the diameter of the cylinder (3) and, at its other end corresponding to the second zone, a dimension smaller than said diameter, the two zones being linked by an inclined plane (8) formed by said side (16), and in the upper area of the case (1) the grooves (4) are parallel to the length (10).

2. Device according to claim 1, **characterized in that** the cylinder (3) is made of metal.

3. Device according to one of the claims 1 and 2, **characterized in that** the case (1) comprises a slot (7) in its rear side (16) extended over the whole length (10) of the case (1) so that the belt (2) can be introduced there..

4. Device according to one of the claims 1 and 2, **characterized in that** the case (1) is constituted of two parts (1'; 1"), so that the belt (2) can be caught between the two parts (1'; 1") before assembling them.

5. Device according to one of the preceding claims, **characterized in that** the case (1) is made of moulded plastic materiel.
